# EUROPEAN PATENT APPLICATION

(11) **EP 0 619 171 A1**
(43) Date of publication of application: **12.10.1994**
(21) Application number: 94830161.9
(22) Date of filing: 01.04.1994
(51) Int. Cl.: B29C 45/14, B29C 67/18

(54) **Process for decorating plastic elements for apparatuses of any kind and decorated elements thus obtained**

(30) Priority: 09.04.1993 IT RM930229
(71) Applicant: CONSORZIO EAGLE, I-67051 Avezzano (AQ) (IT)
(72) Inventor: Di Matteo, Andreo, I-67051 Avezzano (AQ) (IT); Mentrasti, Roberto, I-67051 Avezzano (AQ) (IT)
(74) Representative: Iannone, Carlo Luigi

(57) **Abstract**

The invention relates to a process for decorating plastic elements for apparatuses of any kind, comprising the steps of:
· realizing a plurality of decorations on a transparent film support using a ink able to withstand to the temperatures that are reached in the successive steps, and with any molding technology;
· cutting said support bearing the decorations in single units;
· introducing said single unit within the mold with the decorated face toward the injection zone of the molding material; and
· injecting the molding plastic material in order to obtain the decorated element;

the decoration being comprised between the transparent film support and the solidified injected material.

The products obtained by the above described process are also within the scope of the present invention.

## Description

The present invention relates to a process for decorating plastic elements for apparatuses of any kind and decorated elements thus obtained.

More particularly, the invention relates to a process that allows to realize decorated elements by very simple operations and with very low costs, although a plurality of colours is used for the decoration.

As it is well known, the plastic surfaces can be decorated using different technologies, among which the spray painting or other kind of painting, by which a layer of paint is laid down on the surface of the element to be decorated.

Another technique used is the silk-screen process, consisting in selectively lay down the colour(s) by a suitably pre-drilled frame.

In the tampon off-set printing technique, the ink is transferred on the surface to be decorated by an inked silicone rubber pad. It allows to reach also zones that cannot be reached by the silk-screen process.

Another known technique is the hot-stamping, wherein the images are previously realized on a plastic film, the support, and are made adhesive, so that by a roll or a hammer operated by a press, and with the heat interaction, they are attacked to the surface to be decorated and separated by the support.

Also in the so called in-mold technique a sheet similar to the one used for the hot-stamping is employed. The sheet is introduced within the mold and the plastic is injected adhering the images to the injected material and separating them from the support.

Each of the above mentioned techniques provides that the image is laid down on the surface of the plastic element, so that the decoration is exposed to the outer environment, with the consequent drawbacks.

In fact, in this way the decoration is subject to scratches, dirt, wear, can be contacted by corrosive substances or solvents, and consequently its useful life is remarkably reduced with respect to the necessities.

Another problem that is particularly important in this specific field concerns the fact that the realization of decorations comprising many colours is expensive, and the costs increase with any addition of a new colour.

It can be said that each passage of a colour, using the known technologies, has a cost comparable to the cost of the plastic element in case the decoration occupies the whole surface.

The hot-stamping and in-mold technologies, by which a decoration with more than one colour could be obtained, however present difficulties to realize this since they do not confere to the product strength features and impose limitations about the king of material used since it is necessary to use low-melting materials in order not to ruin the support, said materials being of a lower quality.

The Applicant has individuated that in order to obtain a product having the above mentioned features it is first of all advisable to separate the colouring operations with respect to the molding operations.

In the context as defined in the above, the Applicant has realized a process that allows to obtain a decorated plastic element, having a decoration with different colours, wherein the decoration cannot be removed from the element upon which it is applied.

Further, it is an object of the present invention that of making difficult to scratch the decorated plastic element.

These and other objects are obtained according to the present invention by a process providing the realization of a series of decorations on a support material, and the introduction of a single decoration with the relevant support in the mold, for the injection of the material making the real plastic element, in order to obtain a decorated plastic element wherein the decoration is between an outer protective layer and the plastic element, being thus protected against damaging.

In order to reach said results, it is necessary to use according to the invention an ink that resists the plastic injection temperatures, i.e. up to 300 °C, without damaging, and heat resistant but injectable at low temperature materials.

With a technology according to the one proposed by the present invention, it is possible to make many decorations by the same passage, sharing thus manufacturing costs for different decorations that will be then used separately, and it is possible to realize them on a support that will be then introduced in the mold along with the decoration and that remains on the final decorated plastic element, realizing thus a sandwich within which the decoration is placed.

The process according to the invention further allows to overcome the problem concerning the transfer of bidimensional decorations in a tridimensional article.

Practically, the process according to the invention provides the decoration of a face of a transparent material sheet, preferably plastic, with features chosen on the basis of criteria that will be better defined in the following, by a classic technology, e.g. silk-screen process, tampon off-set printing, or painting.

Then, after having separated the different decorations obtained in single units, the part of the decorated sheet is placed within a mold and the material making the plastic element in herein injected.

In this way, the decorated face contacts the part of the transparent sheet and the plastic element, and these two parts are joined each other by heat action.

An inside decorated article is thus obtained, having the decoration protected by the transparent material layer.

Externally to the transparent material layer a treatment can be provided employing a surface protective layer to avoid the scratching of the article obtained.

It is therefore specific object of the present invention a process for decorating plastic elements for apparatuses of any kind, comprising the steps of:
· realizing a plurality of decorations on a transparent film support using a ink able to withstand to the temperatures that are reached in the successive steps, and with any molding technology;
· cutting said support bearing the decorations in single units;
· introducing said single unit within the mold with the decorated face toward the injection zone of the molding material; and
· injecting the molding plastic material in order to obtain the decorated element;

the decoration being comprised between the transparent film support and the solidified injected material.

Preferably, according to the invention, on the face of said transparent film support upon which it is not realized the decoration an anti-scratching treatment and/or an antireflex treatment and/or the lay down of a protective film and/or an embossing or glazing or tarnishing treatment is realized.

Further, according to the invention, said transparent film is realized employing a polycarbonate or polyethyleneterephtalate film, or in any case a material able to withstand to the molding temperatures of the particular molding material employed.

It is also possible to provide, in case an ink that cannot withstand the specific molding conditions is employed, a further plastic material sheet interleaved between the print and the injected material.

Said further sheet can be coupled to the other one by heat co-lamination, or glueing. The coupling can be also obtained for the effect of the molding conditions (presurre and temperature).

It can also be addedan adhesive when the ink employed has not good adhesion properties.

Always according to the invention, it is preferably used a polyurethan paint, the ink being in any case with features that guarantee the adhesion to the support and to the injected plastic (i.e. in case an ink withstanding to the low temperatures, a plastic material having a lower melting point must be used).

Preferably, the injected plastic material is a mixture of polycarbonate and polymethylmethacrylate, or a polycarbonate with or without a low melting point, or acrylonitrile-butadiene-styrene ABS or an acrylate.

The products obtained by the above described process are within the scope of the present invention.

The choice of the ink to be employed for the realization of the decoration depends on the kind of plastic material injected during the molding, i.e. in function of the melt temperature of the plastic material to which the ink is subjected during the molding.

As already mentioned, the main advantage of the process according to the present invention is that of obtaining an inside decorated object, so that the decoration is protected with respect to any external agent and with respect to wear and/or abrasion problems.

It is further possible to treat the surface faced toward the outer environment, reaching remarkable strength properties.

The transparent film support can be symbolized on a plane, and employing this technique it is also possible to decorate not flat or holed surfaces: in any case the invention solves the problem of symbolizing a not flat face of an article. Further, after the decoration, the transparent film support can be heat or cold shaped to make it easier the subsequent molding.

It can be finally embossed the external surface of the obtained article, in case this treatment is necessary for the specific case.

An example of carrying out the process according to the invention will be now described with illustrative and not limitative purposes.

### EXAMPLE

Molding tests have been made in order to realize windows to cover the display of pocket calculators.

The insert realized with transparent film previously decorated was made up of a polycarbonate sheet, upon which the symbolization has been realized by silk-screen process, and having an anti-scratching surface on the face opposed to the silk-screen, a thickness of 0.25 mm and a protection obtained by a polyethylene protective film thick 0.08 mm.

A first molding has been realized using Lexan 141-R polycarbonate at a temperature of 310° C. The temperature was too high and the ink melt, causing stains.

It has been then used a special polycarbonate with a low melting point, Lexan SP 80, with a molding temperature of 280 °C, with a very good result.

A further molding test has been made using ABS Terluran Tellux KR2812-TR92 and a molding temperature of 260 °C, obtaining a positive result.

Finally, a further test has been made using Lucril KR 2026 acrylate and a molding temperature of 240 °C, obtaining also in this case a positive result.

The articles realized employing ABS and acrylate had some problems if subjected to thermal cycles +85 °C/-40 °C, while those realized employing polycarbonate had no problems.

It demonstrates that it is advantageous to use in the process according to the invention materials with different thermal expansion coefficients, particularly if the object to be realized has to withstand to relevant thermal excursions.

The test executed with Lexan 141-R polycarbonate has instead revealed problems for the ink due to the temperature, so that to solve the problem it has been necessary to use a low melting point polycarbonate, reaching temperatures which the ink can easily withstand.

## Claims

1. Process for decorating plastic elements for apparatuses of any kind, comprising the steps of:
· realizing a plurality of decorations on a transparent film support using a ink able to withstand to the temperatures that are reached in the successive steps, and with any molding technology;
· cutting said support bearing the decorations in single units;
· introducing said single unit within the mold with the decorated face toward the injection zone of the molding material; and
· injecting the molding plastic material in order to obtain the decorated element;
the decoration being comprised between the transparent film support and the solidified injected material.

2. Process according to claim 1, characterized in that on the face of said transparent film support upon which it is not realized the decoration an anti-scratching treatment and/or an anti-reflex treatment and/or the lay down of a protective film and/or an embossing or glazing or tarnishing treatment is realized.

3. Process according to claim 1 or 2, characterized in that said transparent film is realized employing a film of a material that can withstand to the molding temperature of the specific molding material used.

4. Process according to claim 3, characterized in that said transparent film is realized employing a polycarbonate or polyethyleneterephtalate film.

5. Process according to one of the preceding claims, characterized in that a further plastic material sheet interleaved between the print and the injected material is provided.

6. Process according to claim 5, characterized in that said further sheet is coupled to the other one by heat co-lamination, or glueing.

7. Process according to one of the preceding claims, characterized in that as ink a polyurethan paint is used.

8. Process according to one of the preceding claims, characterized in that the injected plastic material is a mixture of polycarbonate and polymethylmethacrylate.

9. Process according to one of the claims 1-7, characterized in that the injected plastic material is a polycarbonate with a low melting point.

10. Process according to one of the claims 1-7, characterized in that the injected plastic material is acrylonitrile-butadiene-styrene ABS.

11. Process according to one of the claims 1-7, characterized in that the injected plastic material is an acrylate.

12. Decorated elements obtained by the process according to one of the claims 1-11.
